(19) Europäisches Patentamt

European Patent Office

Office européen des brevets

(11) **EP 1 343 031 A1**

(12) **DEMANDE DE BREVET EUROPEEN**

(43) Date de publication:
**10.09.2003 Bulletin 2003/37**

(51) Int Cl.⁷: $G02B\ 6/14$, $G02B\ 6/12$

(21) Numéro de dépôt: **03290509.3**

(22) Date de dépôt: **04.03.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **04.03.2002 FR 0202702**

(71) Demandeur: **ALCATEL**
**75008 Paris (FR)**

(72) Inventeurs:
• **de Barros, Carlos**
 **92100 Boulogne-Billancourt (FR)**

• **Provost, Lionel**
 **91460 Marcoussis (FR)**
• **Molina, Marianne**
 **75014 Paris (FR)**
• **Leclere, Christelle**
 **91460 Marcoussis (FR)**
• **Riant, Isabelle**
 **91400 Orsay (FR)**

(74) Mandataire: **Sciaux, Edmond et al**
 **Compagnie Financière Alcatel**
 **Département de Propriété Industrielle,**
 **5, rue Noel Pons**
 **92734 Nanterre Cedex (FR)**

(54) **Convertisseur de mode optique**

(57) Convertisseur de mode optique comprenant un guide optique apte à transmettre un signal optique selon au moins un mode guidé, caractérisé en ce que le guide optique comporte une zone photosensible induisant un profil d'indice spécifique le long d'une section du guide, ledit profil d'indice définissant simultanément une transition adiabatique longitudinale et une distribution transverse du (des) mode(s) guidé(s) de manière à déconfiner le mode fondamental et à maximiser le recouvrement avec un mode d'ordre supérieur.

FIG_1

EP 1 343 031 A1

## Description

La présente invention concerne la conversion de mode optique dans un guide d'onde optique. Une telle conversion de mode peut être requise lors du couplage d'un guide optique vers un autre composant optique ou lors d'un traitement du signal optique transmis dans un guide optique nécessitant une conversion de mode, tel qu'une compensation de dispersion ou une égalisation de gain, par exemple.

Un guide optique, tel qu'une fibre optique ou un guide d'onde planaire, est classiquement composé d'un coeur optique, ayant pour fonction de transmettre et éventuellement d'amplifier un signal optique, entouré d'une gaine optique, ayant pour fonction de confiner le signal optique dans le coeur. A cet effet, les indices de réfraction du coeur $n_1$ et de la gaine $n_2$ sont tels que $n_1 > n_2$. Ainsi, le coeur et la gaine du guide se comportent comme deux guides d'onde concentriques.

Un signal optique transmis dans un guide optique peut être monomode ou multimode selon la taille du coeur et la nature du guide optique. Le(s) mode(s) de propagation transmis dans un guide optique présente donc des distributions spatiales spécifiques à chaque application.

Or, selon les applications, il peut être nécessaire d'adapter la taille d'un mode donné lorsqu'un signal optique est couplé d'un premier composant vers un second composant et que les diamètres de coeurs desdits composants ne sont pas identiques et/ou que les distributions transversales des modes de chaque composant ne sont pas identiques.

L'adaptation de mode pour réaliser un couplage optique sans perte entre deux guides optiques différents a déjà fait l'objet de nombreux développements dans l'art antérieur.

Ainsi, la solution la plus répandue lorsque le mode doit être élargi consiste à utiliser une technique mise au point par la société NTT, dite TEC pour Thermally Expanded Core en anglais, dont une illustration est donnée sur la figure 1. Cette technique, qui a fait l'objet de brevets japonais (JP 5-330853 et JP 5-312676) consiste à dilater le coeur 10 d'une fibre en la chauffant localement. La chaleur entraîne une diffusion des dopants du coeur 10 vers la gaine 11 de la fibre et provoque un élargissement 12 du diamètre du coeur 10.

Cette technique a prouvé son efficacité et permet une dilation du coeur d'un facteur deux à trois pour un couplage sans perte mais comporte néanmoins des inconvénients. En particulier, il est nécessaire de chauffer la fibre à environ 1500 °C pendant plusieurs heures et de bien contrôler les paramètres de temps et de température afin de garantir une dilatation adiabatique du coeur qui permette de conserver le caractère monomode du signal transmis sans pertes.

De plus, la fibre TEC ne permet qu'une expansion du mode de propagation et non une réduction du mode ou une conversion de mode.

Les autres techniques généralement utilisées pour adapter la taille d'un mode de propagation pour un couplage optique entre composants consistent dans la réalisation d'un taper dans le guide optique ou dans des montages complexes faisant intervenir des fibres lentillées. Un taper peut être réalisé par fusion- étirage de l'extrémité d'une fibre afin de créer une diminution adiabatique du diamètre du coeur et permettre une adaptation de mode sans pertes.

Les techniques citées, fibres TEC et tapers, sont efficaces pour certaines applications, mais sont limités à des expansions ou réductions de diamètres de mode et ne permettent pas des adaptations plus complexes, avec des guides optiques présentant des géométries différentes, tels que des guides photoniques ou des guides en anneau.

Une autre technique connue pour adapter la taille d'un mode guidé est décrite dans la publication de Jarvis R A et AI : « Spot size expander using UV trimming of trilayer photosensitive fiber », OECC/IOOC 2001, Confernece Incorporating ACOFT, 2-5 juillet 2001. Cette technique consite à réaliser un profil de photosensibilité qui induit un profil d'indice particulier, permettant en particulier d'élargir la taille du mode optique guidé.

Les adaptateurs de mode connus décrits précédemment ne permettent pas de réaliser une conversion spatiale du mode de propagation, par exemple pour passer d'un mode de propagation LP01 à LP02. Or, une telle conversion de mode peut trouver des applications, par exemple en entrée d'un réseau à long pas pour une égalisation de gain ou pour une compensation de dispersion chromatique sur des modes d'ordre supérieur.

Ainsi, en référence à la figure 2, la demande de brevet internationale WO 99/49342 propose de réaliser une conversion de mode optique en insérant des éléments, dits de sélection de phase 74, 74', entre deux guides optiques 54 et 64, ces éléments pouvant comporter des éléments diffractifs ou réflectifs, tels que des lentilles 72, des miroirs, des réseaux, des composants électro-optiques, etc.

Un tel convertisseur de mode est néanmoins complexe et peu flexible.

Ces techniques connues de l'art antérieur présentent des limitations que la présente invention écarte.

L'invention a ainsi pour objet un convertisseur de mode qui permette de réaliser, simultanément, d'une part une modification radiale de la distribution spatiale du mode, et d'autre part une variation longitudinale adiabatique de cette modification radiale du mode.

A cet effet, l'invention propose de réaliser un profil d'indice spécifique dans une section d'un guide optique au moyen d'un profil de photosensibilité déterminé et contrôlé.

L'invention concerne plus spécifiquement un convertisseur de mode optique comprenant un guide optique apte à transmettre un signal optique selon au moins un mode guidé, caractérisé en ce que le guide optique comporte une zone photosensible irradiée de façon à induire un profil d'indice spécifique le long d'une section du guide, ledit profile d'indice définissant simultanément une transition adiabatique longitudinale et une distribution transverse du (des) mode(s) guidé(s) de manière à déconfiner le mode fondamental et à maximiser le recouvrement avec un mode d'ordre supérieur.

Selon les modes de réalisation, le profil d'indice est induit de façon permanente par irradiation ou de façon reconfigurable par «poling» optique de la zone photosensible.

Selon les applications, la zone photosensible est située dans le coeur et/ou la gaine du guide optique ou est disposée en anneau dans le guide optique.

Selon une caractéristique, la zone photosensible est dopée avec du Germanium.

Selon les modes de mise en oeuvre, le guide optique est monomode ou multimode et peut être constitué d'une fibre optique ou d'un guide d'onde planaire.

Selon les applications, la transition adiabatique de la distribution transverse du mode guidé introduit en outre un élargissement ou un rétrécissement du diamètre dudit mode ou.

Selon les applications, la conversion de mode peut être effectuée sur toute une bande spectrale donnée ou être sélective en longueur d'onde.

Selon les modes de réalisation, la zone photosensible irradiée de façon à induire un profil d'indice spécifique peut être disposée le long d'une section à coeur en cône du guide optique ou le long d'une section à coeur étendu du guide optique

Les particularités et avantages de l'invention ressortiront plus clairement à la lecture de la description qui suit, faite à titre d'exemple illustratif et non limitatif, en référence aux figures annexées dans lesquelles :

- la figure 1, déjà décrite, illustre schématiquement une technique d'adaptation de mode connue de l'art antérieur ;
- la figure 2, déjà décrite, illustre schématiquement une technique de conversion de mode connue de l'art antérieur ;
- la figure 3 illustre schématiquement un profil d'indice dans un adaptateur de mode selon l'invention ;
- la figure 4 est un graphe illustrant l'allure des champs électriques des modes LP01 en entrée et sortie dans une deuxième application de l'adaptateur selon l'invention ;
- la figure 5 est un graphe illustrant le profil d'indice radial en entrée et sortie de l'adaptateur de la figure 6 ;
- la figure 6 est un graphe illustrant l'allure du champ électrique du mode LP01 en sortie de l'adaptateur de la figure 6, et l'allure des champs électriques des modes LP01 et LP02 d'une fibre de compensation.

L'objectif de la présente invention est de réaliser une modification radiale du profil d'indice dans un guide optique et de changer ainsi la distribution spatiale d'au moins un mode de propagation dans ledit guide optique avec une transition longitudinale adiabatique. L'invention peut s'appliquer à un quelconque guide optique, tel qu'un guide planaire ou une fibre optique, qu'il s'agisse d'un guide d'onde monomode ou multimode.

Cette modification de la distribution spatiale d'au moins un mode de propagation consiste en une conversion de mode, éventuellement combinée avec une variation de l'étalement du mode (élargissement ou réduction).

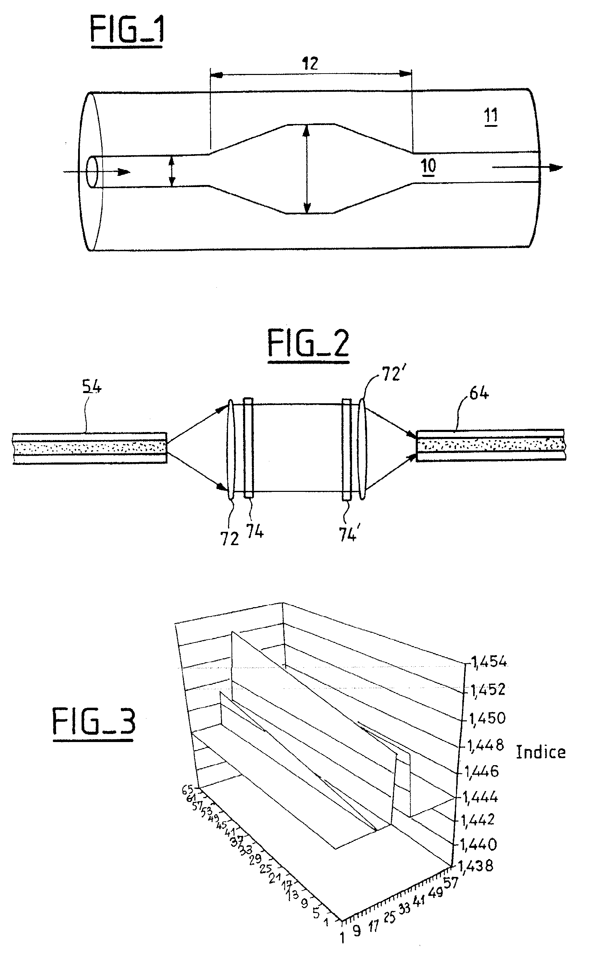

En référence à la figure 3, on nomme arbitrairement z l'axe dit longitudinal selon lequel se propage un signal optique dans le guide et r l'axe dit radial selon lequel est distribué le mode de propagation transmis.

Le guide optique du convertisseur selon l'invention présente une zone photosensible obtenue par dopage des matériaux constituant le guide, par exemple avec du Germanium.

On peut alors établir la relation suivante exprimant le profil d'indice du guide optique :

$$n(r,z) = n_{int} + [PS(r) \times F_{UV}(z)],$$

avec

$n(r,z)$ l'indice du guide optique en un point donné
$n_{int}$ l'indice intrinsèque du guide
$PS(r)$ le profil normalisé de photosensibilité du guide ($0 < PS(r) < 1$)
$F_{UV}(z)$ la fonction d'irradiation longitudinale de la zone photosensible du guide ($0 < FUV(z) < max$, avec $FUV(z) = max$ correspondant à l'irradiation maximum entraînant une modification maximale de l'indice au point z donné.

Ainsi, par une irradiation contrôlée de la zone photosensible du guide, il est possible de modifier localement et très précisément l'indice de réfraction du guide. La variation radiale du profil d'indice permet d'atteindre la conversion de mode recherchée et le contrôle précis de l'irradiation le long du guide permet en particulier d'assurer une transition longitudinale adiabatique de la variation radiale.

Selon les applications, le profil d'indice peut être défini de manière permanente ou reconfigurable dans une section du guide d'onde de l'adaptateur de mode selon l'invention.

La zone photosensible peut être irradiée par exposition à des rayons UV et définir ainsi un profil d'indice donné permanent.

Un profil d'indice donné peut également être induit de façon reconfigurable. Une méthode envisageable pour réaliser un tel profil d'indice consiste dans une méthode dite de « poling » optique. La méthode de « poling» consiste à créer, au sein du matériau dont l'indice de réfraction doit être modifié, une direction et un sens privilégié qui augmentent la susceptibilité non-linéaire d'ordre 2. La zone photosensible du guide est donc insolée et un champ électrique est appliqué simultanément sur ladite zone. La commande des électrodes générant le champ électrique permet de déterminer la variation d'indice et de créer ainsi un profil d'indice reconfigurable.

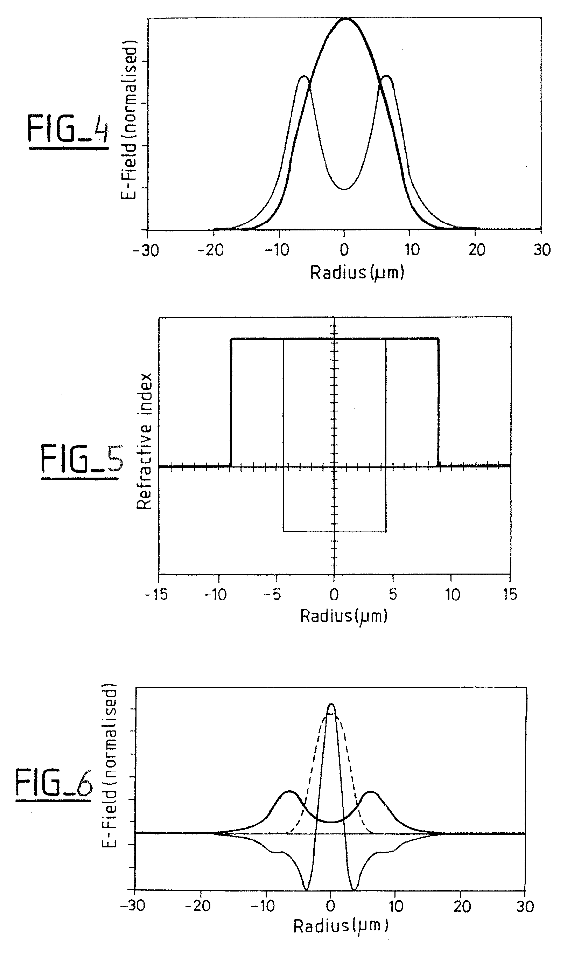

Le graphe de la figure 4 illustre une conversion de mode selon l'invention. En particulier, ce graphe représente l'allure des champs électriques des modes LP01 en entrée du convertisseur (trait épais) et en sortie du convertisseur selon l'invention (trait fin).

La figure 5 représente l'allure radiale du profil d'indice en entrée (trait épais) et en sortie (trait fin) de l'adaptateur de mode utilisé pour l'application illustré sur la figure 4 .

La figure 6 illustre l'allure du champ électrique du mode LP01 en sortie du convertisseur de la figure 4 (trait épais), et l'allure des champs électriques des modes LP01 (pointillés) et LP02 (trait fin) d'une fibre de compensation. On constate que le convertisseur de mode selon l'invention permet d'effectuer une conversion de mode en rapprochant la forme en entrée du LP01 à une forme en W se rapprochant de la forme du mode LP02.

Selon l'invention, un rétrécissement ou un élargissement du mode peut également être conduit progressivement le long d'une section du guide optique du convertisseur selon l'invention par une irradiation UV ou un « poling » approprié de la zone photosensible du guide.Les figures 4 à 6 illustrent une application dans laquelle on a cherché à réaliser une injection dans le mode d'une fibre compensatrice de dispersion sur un mode d'ordre supérieur (par exemple le mode LP02) à partir du mode fondamental issu d'une fibre standard à saut d'indice. L'adaptation s'effectue ainsi en deux étapes : la première étape consiste à déconfiner le mode fondamental LP01 issu d'une fibre standard, de manière similaire à l'application décrite en référence aux figures 4 et 5 ; et la seconde étape (figures 6 à 8) consiste à mettre en forme le mode LP01 ainsi obtenu pour maximiser le recouvrement avec le mode d'ordre supérieur transmis par la fibre compensatrice (LP02). La transformation du mode LP01 en un mode présentant une forme de W, recouvrant la forme du mode LP02, est réalisée en partant d'un profil d'indice similaire à celui obtenu en sorti du premier adaptateur de manière à diminuer les pertes de connexions.

Selon les applications, la conversion de mode selon l'invention peut être effectuée sur toute une bande spectrale donnée, pour une application à une compensation de dispersion large bande par exemple. La conversion de mode peut également être sélective en longueur d'onde, pour une application à une compensation de dispersion mono canal par exemple.

D'autres exemples d'applications peuvent être envisagés pour le convertisseur de mode selon l'invention, selon le même principe que précédemment décrit, afin de réaliser une quelconque modification de la forme d'un mode de propagation d'un signal optique.

En particulier, dans le domaine des fibres amplificatrices, dites EDFA pour Erbium Doped Fiber Amplifier en anglais, la zone dopée terre rare peut être répartie en anneau autour du coeur de la fibre. Dans une structure à pompage par la gaine, il est intéressant de réaliser le pompage du milieu amplificateur en utilisant une répartition de la puissance de pompe qui améliore le recouvrement du faisceau de pompage avec la zone dopée terre rare et ce quelle que soit la position de l'anneau.

Ainsi, la zone dopée terre rare peut être éloignée du centre de la fibre sans nuire à l'efficacité de l'excitation par le faisceau de pompage. En effet, le faisceau de pompage peut être adapté selon l'invention par une modification de l'allure des champs des modes des signaux optiques se propageant dans la fibre amplificatrice.

De même, un profil de photosensibilité non-concentrique peut être envisagé, permettant de réaliser des conversions de mode pour des structures non concentriques. Par exemple, une adaptation entre une fibre standard et une fibre à cristaux photoniques peut ainsi être réalisée.

Dans un autre exemple, une transformation de la distribution transverse du mode issu d'une diode laser, avec un profil dissymétrique, peut être réalisée pour rendre la distribution transverse du mode symétrique. Une telle transformation adiabatique du mode peut être obtenue à l'aide d'un convertisseur de mode selon l'invention ayant un profil de photosensibilité suivant un seul axe.

Les convertisseurs de mode selon l'invention peuvent avantageusement être disposés en cascade afin de fournir des adaptations de distribution modale complexes.

On peut également envisager de combiner avantageusement les effets du convertisseur de mode selon l'invention avec des adaptateurs dits classiques mentionnés en référence à l'art antérieur. Ainsi, la zone photosensible irradiée de façon à induire le profil d'indice spécifique au convertisseur selon l'invention peut être disposée le long d'une section à coeur étendu du guide optique ou le long d'une section à coeur en cône (taper) du guide optique.

## Revendications

**1.** Convertisseur de mode optique comprenant un guide optique apte à transmettre un signal optique selon au moins un mode guidé, **caractérisé en ce que** le guide optique comporte une zone photosensible irradiée de façon à induire un profil d'indice spécifique le long d'une section du guide, ledit profil d'indice définissant simultanément une transition adiabatique longitudinale et une distribution transverse du (des) mode(s) guidé(s) de manière à déconfiner le mode fondamental et à maximiser le recouvrement avec un mode d'ordre supérieur.

2. Convertisseur de mode selon la revendication 1, **caractérisé en ce que** le profil d'indice est induit de façon permanente par irradiation de la zone photosensible.

3. Convertisseur de mode selon la revendication 1, **caractérisé en ce que** le profil d'indice est induit de façon reconfigurable par « poling » optique sur la zone photosensible.

4. Convertisseur de mode selon l'une des revendications précédentes, **caractérisé en ce que** la zone photosensible est située dans le coeur et/ou la gaine du guide optique.

5. Convertisseur de mode selon l'une des revendications précédentes, **caractérisé en ce que** la zone photosensible est disposée en anneau dans le guide optique.

6. Convertisseur de mode selon l'une des revendications précédentes, **caractérisé en ce que** la zone photosensible est dopée avec du Germanium.

7. Convertisseur de mode selon l'une des revendications 1 à 6, **caractérisé en ce que** le guide optique est un guide monomode.

8. Convertisseur de mode selon l'une des revendications 1 à 6, **caractérisé en ce que** le guide optique est un guide multimode.

9. Convertisseur de mode selon l'une des revendications 1 à 8, **caractérisé en ce que** le guide optique est une fibre optique.

10. Convertisseur de mode selon l'une des revendications 1 à 8, **caractérisé en ce que** le guide optique est un guide d'onde planaire.

11. Convertisseur de mode selon l'une des revendications précédentes, **caractérisé en ce que** la transition adiabatique de la distribution transverse du mode guidé induit en outre un élargissement ou un rétrécissement du diamètre dudit mode.

12. Convertisseur de mode selon l'une des revendications 1 à 11, **caractérisé en ce que** la conversion de mode est effectuée sur toute une bande spectrale donnée.

13. Convertisseur de mode selon l'une des revendications 1 à 11, **caractérisé en ce que** la conversion de mode est sélective en longueur d'onde.

14. Convertisseur de mode selon l'une des revendications précédentes, **caractérisé en ce que** la zone photosensible irradiée de façon à induire un profil d'indice spécifique est disposée le long d'une section à coeur en cône du guide optique.

15. Convertisseur de mode selon l'une des revendications précédentes, **caractérisé en ce que** la zone photosensible irradiée de façon à induire un profil d'indice spécifique est disposée le long d'une section à coeur étendu du guide optique.

## FIG_1

## FIG_2

## FIG_3

Indice

1,454
1,452
1,450
1,448
1,446
1,444
1,442
1,440
1,438

FIG_4

FIG_5

FIG_6

**Office européen des brevets**

**RAPPORT DE RECHERCHE EUROPEENNE**

Numéro de la demande

EP 03 29 0509

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | JARVIS R A ET AL: "Spot size expander using UV-trimming of trilayer photosensitive fibres" CONFERENCE PROCEEDINGS. OECC/IOOC 2001 CONFERENCE. INCORPORATING ACOFT, PROCEEDINGS OECC.IOOC 2001: OPTOELECTRONICS AND COMMUNICATIONS CONFERENCE INTEGRATED OPTICS AND OPTICAL FIBER COMMUNICATIONS, SYDNEY, NSW, AUSTRALIA, 1-5 JULY 2001, pages 408-409, XP008012225 2001, Sydney, NSW, Australia, OECC/IOOC 2001 Conference, Australia ISBN: 0-646-41752-5 | 1,2,4-13 | G02B6/14 G02B6/12 |
| Y | * le document en entier * | 3,14,15 | |
| | --- | | |
| X | JIN X: "OPTICAL FIBER INDEX TAPER-THEORETICAL ANALYSIS AND EXPERIMENT DEMONSTRATION" INTERNATIONAL JOURNAL OF INFRARED AND MILLIMETER WAVES, PLENUM PUBLISHING, NEW YORK, US, vol. 19, no. 6, 1 juin 1998 (1998-06-01), pages 875-886, XP000766207 ISSN: 0195-9271 * abrégé * * page 879, alinéa 2 * * page 883, alinéa 2 * | 1,2,4, 6-13 | **DOMAINES TECHNIQUES RECHERCHES (Int.Cl.7)** G02B |
| | --- | | |
| Y | FUJIWARA T ET AL: "Electro-optic modulation in germanosilicate fibre with UV-excited poling" ELECTRONICS LETTERS, IEE STEVENAGE, GB, vol. 31, no. 7, 30 mars 1995 (1995-03-30), pages 573-575, XP006002642 ISSN: 0013-5194 * le document en entier * | 3 | |
| | --- -/-- | | |

Le présent rapport a été établi pour toutes les revendications

| Lieu de la recherche | Date d'achèvement de la recherche | Examinateur |
|---|---|---|
| LA HAYE | 25 juin 2003 | Verbandt, Y |

**Office européen des brevets**

**RAPPORT DE RECHERCHE EUROPEENNE**

Numéro de la demande

EP 03 29 0509

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | WO 01 59496 A (CORNING INC) 16 août 2001 (2001-08-16) * abrégé * * figure 5 * | 14,15 | |
| X | FRISKEN S J: "LIGHT-INDUCED OPTICAL WAVEGUIDE UPTAPERS" OPTICS LETTERS, OPTICAL SOCIETY OF AMERICA, WASHINGTON, US, vol. 18, no. 13, 1 juillet 1993 (1993-07-01), pages 1035-1037, XP000372731 ISSN: 0146-9592 * le document en entier * | 1,2,4,7, 9,11 | |
| A | LJUNGSTROM A M ET AL: "Light-induced self-writing effects in bulk chalcogenide glass" JOURNAL OF LIGHTWAVE TECHNOLOGY, JAN. 2002, IEEE, USA, vol. 20, no. 1, pages 78-85, XP002226454 ISSN: 0733-8724 | | DOMAINES TECHNIQUES RECHERCHES (Int.Cl.7) |
| A | SVALGAARD M ET AL: "Direct UV writing of buried singlemode channel waveguides in Ge-doped silica films" ELECTRONICS LETTERS, IEE STEVENAGE, GB, vol. 30, no. 17, 18 août 1994 (1994-08-18), pages 1401-1403, XP006000929 ISSN: 0013-5194 * le document en entier * | 10 | |

-/--

Le présent rapport a été établi pour toutes les revendications

| Lieu de la recherche | Date d'achèvement de la recherche | Examinateur |
|---|---|---|
| LA HAYE | 25 juin 2003 | Verbandt, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&: membre de la même famille, document correspondant

EPO FORM 1503 03.82 (P04C02)

**Office européen**
**des brevets**

**RAPPORT DE RECHERCHE EUROPEENNE**

Numéro de la demande

EP 03 29 0509

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | POULSEN CHRISTIAN V ET AL: "Photosensitivity in germania-doped silica films" PROCEEDINGS OF THE 1994 CONFERENCE ON LASERS AND ELECTRO-OPTICS EUROPE;AMSTERDAM, NETH AUG 28-SEP 2 1994, 1994, XP002226455 Conf Lasers Electro Opt Eur Tech Dig;Conference on Lasers and Electro-Optics Europe - Technical Digest 1994 IEEE, Piscataway, NJ, USA * le document en entier * | 10 | |
| A | JARVIS R A ET AL: "Bend-radius reduction in planar waveguides using UV post-tuning" ELECTRONICS LETTERS, IEE STEVENAGE, GB, vol. 33, no. 10, 8 mai 1997 (1997-05-08), pages 892-894, XP006007473 ISSN: 0013-5194 * le document en entier * | 10 | |
| A | KY N H ET AL: "EFFICIENT BROADBAND INTRACORE GRATING LP01-LP02 MODE CONVERTERS FOR CHROMATIC-DISPERSION COMPENSATION" OPTICS LETTERS, OPTICAL SOCIETY OF AMERICA, WASHINGTON, US, vol. 23, no. 6, 15 mars 1998 (1998-03-15), pages 445-447, XP000753367 ISSN: 0146-9592 * le document en entier * | 12,13 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| LA HAYE | 25 juin 2003 | Verbandt, Y |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 0509

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-06-2003

| Document brevet cité au rapport de recherche | Date de publication | Membre(s) de la famille de brevet(s) | Date de publication |
|---|---|---|---|
| WO 0159496 A | 16-08-2001 | US 6453102 B1 | 17-09-2002 |
| | | AU 3265301 A | 20-08-2001 |
| | | EP 1256023 A2 | 13-11-2002 |
| | | WO 0159496 A2 | 16-08-2001 |
| | | US 2002186946 A1 | 12-12-2002 |

EPO FORM P0460